Europäisches Patentamt

European Patent Office

Office européen des brevets

(11) Veröffentlichungsnummer: **0 396 054**

**A2**

# (12) EUROPÄISCHE PATENTANMELDUNG

(21) Anmeldenummer: **90108135.6**

(22) Anmeldetag: **27.04.90**

(51) Int. Cl.5: **B60S 3/04**

(30) Priorität: **02.05.89 DE 3914438**

(43) Veröffentlichungstag der Anmeldung:
**07.11.90 Patentblatt 90/45**

(84) Benannte Vertragsstaaten:
**AT BE CH DE DK ES FR GB IT LI LU NL SE**

(71) Anmelder: **EDELHOFF POLYTECHNIK GMBH & CO.**
**Heckenkamp 31**
**D-5860 Iserlohn 5(DE)**

(72) Erfinder: **Edelhoff, Gustav Dieter**
**Langerfeld-Strasse 57**
**D-5860 Iserlohn(DE)**
Erfinder: **Nickel, Günter**
**Im Frankenthal 2**
**D-5248 Wissen-Sieg(DE)**
Erfinder: **Hoyer, Helmut, Prof.Dr.-Ing.**
**Hemker Weg 9**
**D-5800 Hagen 1(DE)**

(74) Vertreter: **Gossel, Hans K., Dipl.-Ing.**
**Rechtsanwälte E. Lorenz - B. Seidler M.**
**Seidler - Dipl.-Ing. H.K. Gossel Dr. I. Philipps**
**- Dr. P.B. Schäuble Dr. S. Jackermeier -**
**Dipl.-Ing. A. Zinnecker**
**Widenmayerstrasse 23 D-8000 München**
**22(DE)**

(54) **Verfahren zum Waschen von Fahrzeugen.**

(57) Es soll ein Verfahren zum Waschen von Fahrzeugen an die Hand gegeben werden, das individuell an das zu waschende Fahrzeug angepaßt ist. Hierzu werden vor Ablauf des Waschvorgangs fahrzeugspezifische Daten bezüglich des Fahrzeugtyps, der Fahrzeugabmessungen und des Zeitpunkts der letzten Wäsche an eine zentrale Steuereinheit gegeben. Das Fahrzeug wird an einer vordefinierten Stelle der Waschanluge positioniert und die genaue Stellung des Fahrzeugs in der Waschanlage wird durch eine Sensorik vermessen. Die durch die Sensorik aufgenommenen Stellungskoordinaten werden an die zentrale Steuereinheit übermittelt und der Waschvorgang durch die zentrale Steuereinheit wird aufgrund der zuvor eingelesenen Daten gesteuert. Durch dieses erfindunsgemäße Verfahren kann in vorteilhafter Weise die Intensität des Waschens an die individuell vorliegenden Gegebenheiten angepaßt werden.

## Verfahren zum Waschen von Fahrzeugen

Die Erfindung betrifft ein Verfahren zum Waschen von Fahrzeugen. Automatische Fahrzeugwaschanlagen sind in unterschiedlichster Bauart bereits bekannt. So sind beispielsweise Verfahren bekannt, bei denen das Fahrzeug in einer Waschstrasse auf einem Förderband transportiert wird und an den einzelnen Waschstationen vorbeigeführt wird. Dabei wird vor dem Einfahren in die Waschstrasse das gewünschte Waschprogramm von dem Bedienungspersonal eingegeben. Entsprechend diesem vorgegebenen Waschprogramm werden während des Durchlaufs des Fahrzeugs entsprechende Anlagenkomponenten aktiviert. Die Aktivierung dieser Waschanlagenkomponenten erfolgt dabei über ein vorgegebenes Steuerprogramm, das nach Eingabe des vorgewählten Waschprogramms abläuft. Erfahrungsgemäß werden bei modernen Waschstrassen ca. 5 bis 10 Programmstufen angeboten, die von einer Schnellwäsche ohne Trocknen bis zu einer Komplettwäsche einschließlich Unterbodenwäsche und Heißwachsversiegelung reichen.

Es sind auch Verfahren zum Waschen von Fahrzeugen bekannt, bei denen das Fahrzeug während des Waschvorgangs ortsfest angeordnet ist und die entsprechenden Waschvorgänge durch ein entlang des Fahrzeug geführtes Portal erfolgen, an dem die einzelnen Arbeitsgerätschaften, die beim Waschen des Fahrzeugs eingesetzt werden, wie beispielsweise rotierende Bürsten oder Wasserdüsen, angeordnet sind. Auch bei diesen Verfahren können unterschiedliche Programme gewählt werden, so daß je nach gewünschter Waschintensität das Portal unter Einsatz verschiedener Waschwerkzeuge entsprechend des vorgewählten Programms entlang des Fahrzeugs verfahren wird.

Es ist bei den zuvor beschriebenen Waschverfahren auch schon bekannt, die Arbeitswerkzeuge, d.h. beispielsweise die rotierenden Bürsten oder Wasserdüsen, entsprechend der Abmessung des zu waschenden Fahrzeugs zuzustellen. Dabei wird gleichzeitig mit der Zustellung des Arbeitswerkzeugs eine Sensorik entlang des Fahrzeugs verfahren, die charakteristische Daten, wie beispielsweise Höhe und Länge des Fahrzeugs aufnimmt, so daß die Zustellung der Arbeitswerkzeuge entsprechend der von dieser Sensorik aufgenommenen und in einer Zentraleinheit verarbeiteten Daten erfolgt. Diese bekannte Sensorik nimmt aber nur die groben Abmessungen des Fahrzeugs auf, so daß die Arbeitswerkzeuge gerade nicht in fahrzeugspezifisch vorhandene und eventuell schlecht zugängliche Flächenbereich gelangt, die besonders stark verschmutzt sind. Darüber hinaus muß das Fahrzeug genau in einer vorgegebene Stellung bezüglich der Waschwerkzeuge positioniert werden. Bei einer Abweichung von dieser vorbestimmten Position werden beispielsweise die rotierenden Bürsten ungleichmäßig an das zu waschende Fahrzeug angedrückt, so daß ein unbefriedigendes Waschergebnis resultiert.

Ein weiterer entscheidender Nachteil der vorbekannten Waschverfahren besteht darin, daß nur wenige und grob abgestufte Programmalternativen zur Verfügung gestellt werden. Dadurch kann das Waschverfahren nur ungenügend an den aktuellen Verschmutzungszustand des Fahrzeugs angepasst werden. So ist es beispielsweise unnötig, wenn ein regelmäßig jede Woche gewaschenes Fahrzeug eine intensive Vollwäsche erhält. Selbst bei der Wahlmöglichkeit einer "Schnellwäsche", die in der Regel auf einen höheren Verschmutzungsgrad des zu waschenden Fahrzeugs nicht abgestellt ist, wird in diesem Fall ein zu intensives Waschprogramm durchlaufen. Dabei wird unnötig viel Waschwasser verbraucht und durch die entsprechend lange Behandlung mit den rotierenden Bürsten wird der Lack des Fahrzeugs unnötig intensiv beansprucht.

Es stellt sich daher die Aufgabe, das gattungsgemäße Fahrzeugwaschverfahren derart weiterzubilden, daß es möglichst umweltschonend durchgeführt werden kann, d.h. daß möglichst wenig Frischwasser aus dem Leitungsnetz für die Fahrzeugwäsche zur Verfügung gestellt werden muß. Gleichzeitig soll jedoch eine möglichst gute Fahrzeugwäsche erfolgen, d.h. auch schwer zugängliche Karosserieteile sollen entsprechend gereinigt werden.

Diese Aufgabe wird erfindungsgemäß durch die im Kennzeichen des Anspruchs 1 mitgeteilten Verfahrensschritte gelöst. Dabei werden vor Ablauf des Waschvorgangs sämtliche fahrzeugspezifischen Daten an eine zentrale Steuereinheit übermittelt. Der fahrzeugspezifische Datensatz enthält Einzeldaten bezüglich der Fahrzeugabmessungen, wobei insbesondere auch Koordinaten von erfahrungsgemäß besonders stark verschmutzten Fahrzeugteilen enthalten sein können, und Daten bezüglich des Zeitpunkts der letzten Wäsche. Anschliessend wird das Fahrzeug an einer vorbestimmten Stelle der Waschanlage positioniert, wonach die genaue Stellung des Fahrzeugs in der Waschanlage durch eine Sensorik vermessen wird. Auch diese Daten werden an die zentrale Steuereinheit übermittelt. Somit enthält die zentrale Steuereinheit der Waschanla ge vor Beginn des jeweiligen Waschvorgangs einen vollständigen Datensatz, wodurch das Waschverfahren an jedes zu waschende Fahrzeug individuell angepaßt werden kann.

Der Hauptvorteil dieses Verfahrens besteht darin, daß es sehr flexibel an die aktuellen Gegebenheiten, d.h. Abmessungen und Verschmutzungszustand des Fahrzeugs, angepaßt werden kann. Dadurch wird einerseits vermieden, daß ein lange nicht gewaschenes Fahrzeug, das stark verschmutzt ist, aufgrund eines zu kurz vorgewählten Programms nur ungenügend gereinigt wird. Andererseits wird durch die Information des Verschmutzungszustandes der Einsatz der Reinigungsflüssigkeiten und Zusatzstoffe bzw. die Dauer des Einsatzes der rotierenden Walzen optimiert. Damit wird sichergestellt, daß jeweils nur soviel Wasser verwendet wird, wie es entsprechend dem Verschmutzungsgrad des zu waschenden Fahrzeugs gerade notwendig ist.

Vorteilhafte Ausgestaltungen des Waschverfahrens sind in den sich anschliessenden Unteransprüchen enthalten. Dabei kann die beanspruchte Behandlungsfolge und Behandlungsart der Fahrzeuge nach Bedarf geändert werden.

Gemäß besonderer Ausgestaltungen der Erfindung wird das für die Fahrzeugwäsche benötigte Wasser weitgehend aus aufgefangenem Sicker- bzw. Regenwasser und Brauchwasser zur Verfügung gestellt.

Weitere Einzelheiten und Vorteile des erfindungsgemäßen Verfahrens werden anhand des in der beigefügten Zeichnung dargestellten Ausführungsbeispiels erläutert. Es zeigen:

Fig. 1: eine perspektivische Darstellung einer Waschstraßenhalle mit einem Fahrzeug während des Wasch vorgangs und einem Fahrzeug, dessen fahrzeugspezifische Daten gerade eingelesen werden;

Fig. 2: ein schematisches Verfahrensfließbild zur Erläuterung der Wasserzufuhr;

Fig. 3: eine perspektivische Darstellung von Teilen einer Waschhalle während eines Reinigungsschritts und

Fig. 4: ebenfalls eine perspektivische Darstellung eines Teils der Waschstraßenhalle während eines anderen Reinigungsschritts.

Am Einfahrtstor der Waschhalle 2 werden die fahrzeugspezifischen Daten des zu waschenden Fahrzeuges 1 erfasst. So stoppt das zu waschende Fahrzeug 1 vor der Waschhalle 2 über einer in dem Fahrweg eingelassenen Induktionsschleife 3. Ein im vorderen unteren Bereich des Fahrzeugs angebrachter Chip 4, der mit einem Sender kombiniert ist, übermittelt die fahrzeugspezifischen Daten an die Induktionsschleife 3. Diese Datenübertragung wird auch als "Radio frequency tagging" bezeichnet. Alternativ dazu können diese Daten aber auch über eine Strichcodekarte, deren Code über einen Lightpen erfaßt wird oder über eine fahrzeugspezifische Magnetkarte, die in einen Kartenleser eingeschoben wird, erfolgen.

Der erfaßte Code enthält die Abmessungen des Fahrzeugs betreffende Daten, beispielsweise Daten über die Art des Fahrzeugs (PKW, LKW etc.), die Länge, die Breite und diejenigen Stellen des Fahrzeugs, die erfahrungsgemäß stärker verschmutzt sind. Zusätzlich enthält der Datensatz auch noch Daten, die den Zeitpunkt der letzten Wäsche angeben. Dieser gesamte Datensatz wird von der Induktionsschleife 3 oder dem alternativ verwendeten Lesegerät über eine Datenleitung 5 an eine zentrale Steuereinheit 6 übertragen.

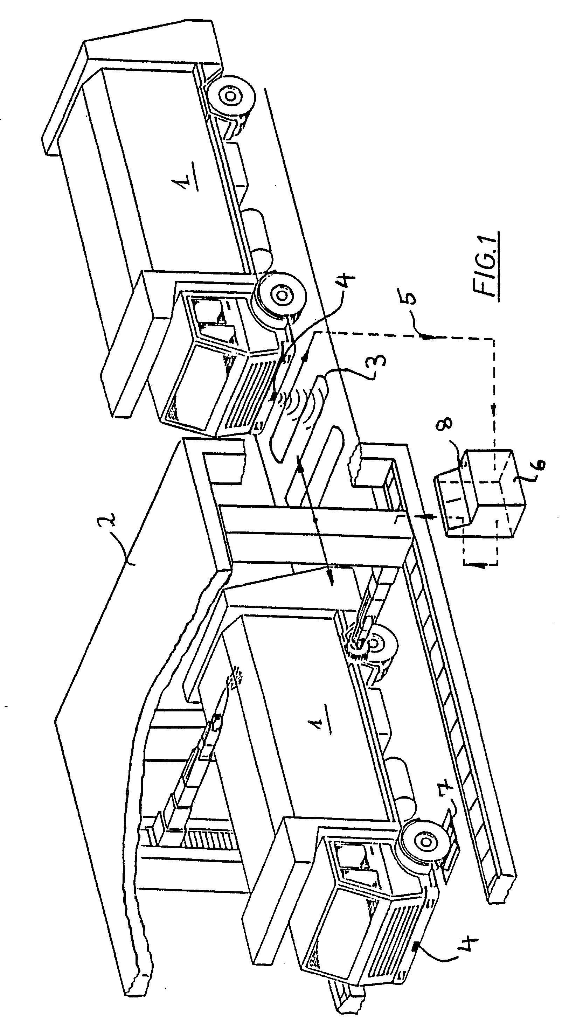

Nach Beendigung des Einlesevorgangs der Information erhält der Fahrer ein optisches oder akustisches Signal zur Einfahrt in die Waschstraßenhalle. Dort wird das Fahrzeug 1 an einer definierten Stelle positioniert. Diese ist, wie in Fig. 1 dargestellt, durch in einer Mulde oder mehreren Mulden angebrachten Rollen 7, über welchen ein oder beide Vorderräder positioniert werden, festgelegt. Nach Abstellen des Fahrzeugs innerhalb der Waschstraßenhalle 2 kann der Fahrer durch Betätigung eines Schalters 6 an der Steuereinheit 8 außerhalb der Waschstraßenhalle 2 den Waschvorgang starten. Nach diesem Startbefehl wird zunächst mittels einer Sensorik die genaue Stellung des Fahrzeugs in der Waschanlage vermessen. Auch die durch die Sensorik aufgenommenen Stellungskoordinaten werden an die zentrale Steuereinheit 6 übermittelt.

In Folge wird über ein entsprechendes Entscheidungsprogramm anhand der Daten der letzten Wäsche entschieden, ob eine Unterbodenwäsche, Vollwäsche (gründliche Reinigung) oder eine Schnellwäsche durchgeführt wird. Dabei kann die Intensität der Fahrzeugwäsche in besonders vorteilhafter Weise stufenlos eingestellt werden. Neben der einfachen Information des letzten Waschdatums können natürlich zuvor zusätzliche Informationen für einen beispielsweise überdurchschnittlichen aktuellen Verschmutzungsgrad des Fahrzeugs eingegeben werden, die bei der Entscheidung bezüglich der Waschintensität berücksichtigt werden können.

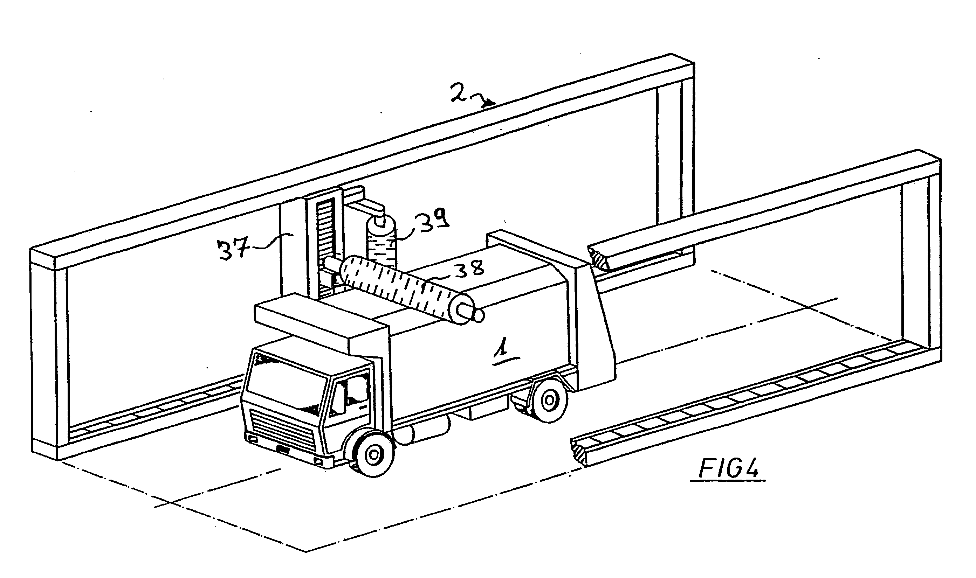

Anschliessend läuft der eigentliche Waschvorgang ab, der entsprechend der eingelesenen Daten durch die zentrale Steuereinheit 6 gesteuert wird. Dazu fahren Säulen 37 und 37', welche sämtliche für die Wäsche notwendigen Arbeitswerkzeuge beinhalten, jeweils innerhalb von Portalen vom vorderen Teil des Fahr zeugs 1 aus entlang der Fahrzeuglänge bis zum Fahrzeugheck und versprühen eine Wasser-Shampoo-Mischung. Dabei kann die Menge der versprühten Wasser-Shampoo-Mischung auf den aktuellen Verschmutzungszustand des Fahrzeugs 1 abgestimmt werden. In der Rücklaufphase der Säulen 37 und 37' wird dem Wasser ein üblicher Glanztrockner zugemischt. Danach fahren die Säulen 37 und 37' erneut den vorbeschriebenen Weg ab, wobei rotierende Waschbürsten 38 und 39 entsprechend der eingelesenen Fahrzeugdaten zugestellt werden. Dabei werden insbesondere die durch die Sensorik eigens aufgenommenen Positionsabweichungen gegenüber der Soll-Position des Fahrzeugs 1 in der Waschstraßenhalle 2 berücksichtigt (Fig. 4).

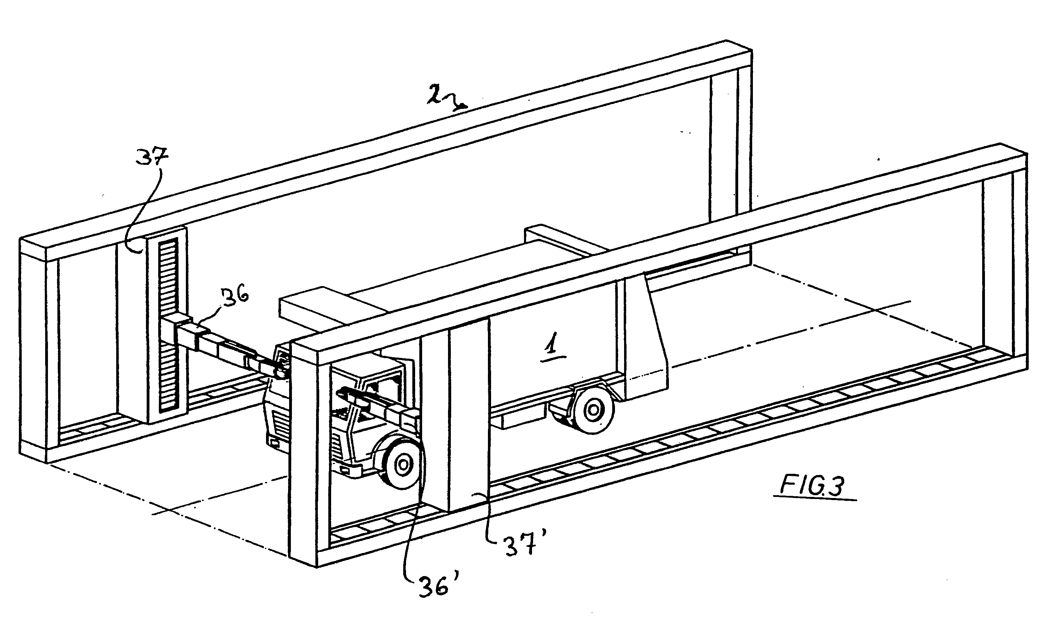

Anschließend fahren in Säulen 37 und 37' eingebaute und in der Höhe verfahrbare Roboterarme 36 und 36', die beispielsweise mit Hochdruckspritzköpfen und mit rotierenden Waschbürsten ausgestattet sind, die zuvor in die zentrale Steuereinheit eingegebenen nur schwer zugänglichen Stellen des Fahrzeugs 1 an, die einer besonders gründlichen Reinigung bedürfen. Die Roboterarme 36 und 36' sind vorteilhaft in ihrer Längsachse teleskopierbar oder über eine Gelenkanordnung beweglich. Sie weisen ein Werkzeugwechselsystem auf und arbeiten beispielsweise, wie in Fig. 1 dargestellt, mit kleinen Topfbürsten (vgl. auch Fig. 3).

Nach der Reinigung wird das Fahrzeug 1 in bekannter Weise durch den Luftstrom eines Gebläses getrocknet. Selbstverständlich kann die Abfolge des Waschvorgangs je nach gestelltem Programm auch gegenüber dem vorbeschriebenen Waschprogramm modifiziert werden. So kann insbesondere auch eine Klarwäsche während des Waschvorgangs vorgenommen werden.

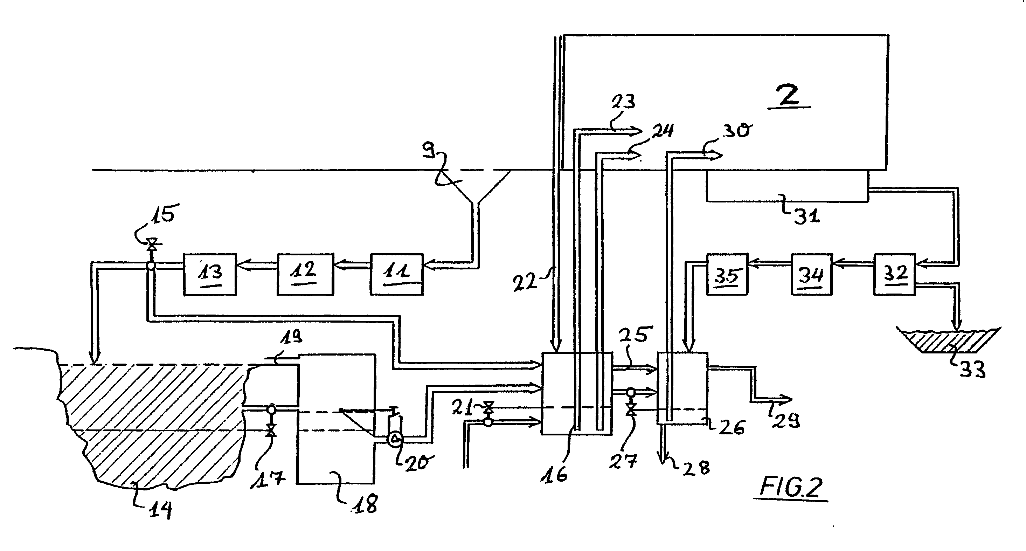

Das Waschverfahren ist in besonders vorteilhafter Weise dadurch ausgestaltet, daß in einem der Waschstraßenhalle benachbarten Bereich und/oder auf dem Dach Sickerwasser bzw. Regenwasser aufgefangen wird, das für die Fahrzeugwäsche verwendet wird. Zusätzlich kann bereits verbrauchtes Waschwasser aufgefangen, aufbereitet und einem erneuten Waschvorgang wieder zugeführt werden. Ein entsprechendes Verfahrensfließbild, das die Aufbereitung und Zwischenspeicherung des Sicker- bzw. Regenwassers und des Brauchwassers beinhaltet, ist in Fig. 2 dargestellt. Über ein der Einfachheit halber als Trichter 9 dargestelltes Leitungsnetz wird Wasser vom Hof vor der Halle 2 aufgefangen. Dieses wird zunächst einem Schlammauffangbecken 11 zugeführt. Nach diesem wird dieses in ein Benzinabscheidebecken 12 oder Koaleszenzabscheider und darauffolgend in ein Pumpenvorlagebecken 13 weitergefördert. Dem Pumpenvorlagebecken 13 ist als Reservebecken ein Biotop 14 nachgeschaltet. An das Biotop 14 schließt sich ein Pumpenvorlagebecken 18 und ein Frischwasserbecken 16 an.

Werden große Wassermengen benötigt oder ist der Wasserstand im Reservebecken 14 in dem nachfolgenden Pumpenvorlagebecken 18 sehr niedrig, kann über das Ventil 15 das Wasser unmittelbar dem Frischwasserbecken 16 zugeführt werden. Ist dagegen ein hinreichender Wasservorrat im Reservebecken 14 vorhanden, kann das Wasser über ein pegelabhängiges Ventil 17 in das Pumpenvorlagebecken 18 fließen. Das Reservebecken 14 weist einen Überlauf 19 auf, der wiederum in das Pumpenvorlagebecken 18 führt. Aus dem Pumpenvorlagebecken 18 wird das Wasser über eine schwimmergesteuerte Kreiselpumpe 20 in das Frischwasserbecken 16 gepumpt. Neben dem über das Leitungsnetz 9 aufgefangenen Sickerwasser kann zusätzlich Regenwasser z.B. vom Dach der Halle 2 über die Leitung 22 in das Frischwasserbecken 16 laufen. Reicht die Menge des Sicker- bzw. Regenwassers nicht aus, kann dem Frischwasserbecken 16 über ein pegelabhängiges Ventil 21 Wasser aus dem öffentlichen Leitungsnetz zugeführt werden. Dem Frischwasserbecken 16 wird Wasser für die Klarwäsche in der Waschstraßenhalle 2 über Leitungen 23 und 24 entnommen. Dem Frischwasserbecken 16 kann gegebenenfalls auch für andere Verbraucher Wasser entnommen werden, beispielsweise für Sanitäranlagen eines benachbarten Gebäudes.

Unterhalb der Waschstraßenhalle 2 ist ein Becken 31 zum Auffangen des verbrauchten Waschwassers angeordnet. Das Waschwasser kann dabei durch Gitterroste, auf denen das Fahrzeug 1 gegebenenfalls steht, in das Becken 31 ablaufen. Der Boden des Beckens 31 kann als schräge Ebene ausgebildet sein, so daß das aufgefangene Schmutzwasser einem ersten Absetzbecken 32 zugeführt werden kann. Dieses Absetzbecken, - auch als Schlammfangbecken bezeichnet - dient zum Abtrennen des Schlammes, der einer angeschlossenen Schlammulde 33 zugeführt wird. Dem Absetzbecken 32 ist ein Benzinabscheider 34 und ein Koaleszenzabscheider 35 - beide üblicher Bauart - nachgeschaltet. Nach Durchlaufen dieser Abscheider wird das so aufbereitete Brauchwasser in ein Brauchwasserbecken 26 geleitet. Von dem Brauchwasserbecken 26 wird Wasser über eine Leitung 30 zur Haupt- und Unterbodenwäsche entnommen. Darüber hinaus kann das Brauchwasser auch anderweitig verwendet werden. So kann es beispielsweise über die Leitung 28 als Löschwasser entnommen werden. Das Frischwasserbecken 16 ist mit dem Brauchwasserbecken 26 über mehrere Leitungen verbunden. Pegelabhängig vom Becken 26 fließt Wasser über das Ventil 27 aus dem Frischwasserbecken 16 dem Brauchwasserbecken 26 zu. Das Frischwasserbecken 16 ist weiterhin vor einem Überlaufen dadurch geschützt, daß ab einem vorbestimmten Niveau Wasser über die Leitung 25 in das Brauchwasserbecken 26 abgeleitet wird. Dieses wiederum weist eine Überlaufleitung 29 auf.

Das vorbeschriebene Verfahren kann bei unterschiedlichen Fahrzeugarten eingesetzt werden. So eignet es sich insbesondere für Personenkraftwagen, Busse, Lastkraftwagen, Hänger, Lastkraftwagen mit Hänger, Sattelzüge und auch schienengebundene Fahrzeuge.

**Ansprüche**

1. Verfahren zum Waschen von Fahrzeugen, **dadurch gekennzeichnet**, daß

(1) vor Ablauf des Waschvorgangs fahrzeugspezifische Daten, insbesondere bezüglich des Fahrzeugtyps, der Fahrzeug- abmessungen und des Zeitpunkts der letzten Wäsche, an eine zentrale Steuereinheit gegeben werden;

(2) das Fahrzeug an einer vordefinierten Stelle der Waschanlage positioniert wird;

(3) die genaue Stellung des Fahrzeugs in der Waschanlage durch eine Sensorik vermessen wird;

(4) die durch die Sensorik aufgenommenen Stellungskoordinaten an die zentrale Steuereinheit übermittelt werden und

(5) der Waschvorgang durch die zentrale Steuereinheit aufgrund der zuvor eingegebenen Daten gesteuert wird.

2. Verfahren nach Anspruch 1, dadurch gekennzeichnet, daß der Waschvorgang aus folgenden Schritten besteht, wobei die Schrittfolge geändert werden kann:

(1) Ein Portal wird in eine Richtung entlang der Fahrzeuglänge verfahren, wobei es eine Wasser-Shampoo-Mischung versprüht;

(2) das Portal wird entlang der Fahrzeuglänge zurückverfahren und versprüht eine Mischung aus Wasser und Glanztrockner;

(3) das Portal wird erneut entlang der Fahrzeuglänge verfahren, wobei rotierende Waschbürsten entsprechend der eingelesenen Fahrzeugdaten dem Fahrzeug zugestellt werden;

(4) das Portal wird entlang der Fahrzeuglänge zurückverfahren, wobei mit Hochdruckspritzköpfen versehene Roboterarme entsprechend der eingelesenen Fahrzeugdaten schlecht zugänglichen Stellen des Fahrzeugs zugestellt werden und durch diese eine Reinigungslösung zugespritzt wird.

3. Verfahren nach Anspruch 1 und/oder 2, dadurch gekennzeichnet, daß das Fahrzeug nach Beendigung des Waschvorgangs durch ein portalseitig vorgesehenes Gebläse getrocknet wird.

4. Verfahren nach Anspruch 2, dadurch gekennzeichnet, daß die mit den Hochdruckspritzköpfen versehenen Roboterarme zusätzlich mit rotierenden Waschbürsten ausgestattet sind, die den schlecht zugänglichen Stellen zugestellt werden.

5. Verfahren nach einem der Ansprüche 1 bis 4, dadurch gekennzeichnet, daß in einem der Waschstraßenhalle benachbarten Bereich und/oder auf deren Dach Sickerwasser bzw. Regenwasser aufgefangen, aufbereitet und gegebenenfalls zwischengespeichert wird, von wo es vorzugsweise für die Klärwäsche und/oder andere Verbraucher entnommen werden kann.

6. Verfahren nach einem der Ansprüche 1 bis 5, dadurch gekennzeichnet, daß das beim Waschen des Fahrzeugs verbrauchte Waschwasser aufgefangen, aufbereitet und gegebenenfalls zwischengespeichert wird, von wo es vorzugsweise für die Haupt- und Unterbodenwäsche und/oder andere Verbraucher entnommen werden kann.

7. Verfahren nach Anspruch 5 und Anspruch 6, dadurch gekennzeichnet, daß der Brauchwasserspeicher gegebenenfalls mit zwischengespeichertem Sickerwasser bzw. Regenwasser aufgefüllt wird.

8. Verfahren nach Anspruch 5, dadurch gekennzeichnet, daß der Sickerwasserspeicher gegebenenfalls mit Frischwasser aus dem Leitungsnetz aufgefüllt wird.

9. Verfahren nach einem der Ansprüche 5 bis 8, dadurch gekennzeichnet, daß die Aufbereitungsstufe aus einem Schlammauffangbecken, einem Benzinabscheidebecken und gegebenenfalls einem Koaleszenzabscheider besteht.

FIG.1

EP 0 396 054 A2

FIG.2

37

2

36

1

FIG.3

36'

37'

EP 0 396 054 A2

FIG4

EP 0 396 054 A2